# EUROPÄISCHE PATENTANMELDUNG

(11) **EP 2 017 146 A1**
(43) Veröffentlichungstag der Anmeldung: **21.01.2009**
(21) Anmeldenummer: 08104337.4
(22) Anmeldetag: 10.06.2008
(51) Int. Cl.: B60S 1/18

(54) **Scheibenwischvorrichtung**

(30) Priorität: 20.07.2007 DE 102007034039
(71) Anmelder: ROBERT BOSCH GMBH, 70442 Stuttgart (DE)
(72) Erfinder: Trenkle, Lothar, 77833, Ottersweier (DE)

(57) **Zusammenfassung**

Die Erfindung betrifft eine Scheibenwischvorrichtung (10) mit einem Scheibenwischerantrieb (11) zum pendelnden Antreiben eines in eine Parklage (P) verstellbaren Wischerarms (20). Erfindungsgemäß ist vorgesehen, dass Mittel (32) zum Blockieren des Scheibenwischerantriebs (11), insbesondere bei in der Parklage (P) befindlichem Wischerarm (20), vorgesehen sind.

## Beschreibung

### Stand der Technik

Die Erfindung betrifft eine Scheibenwischvorrichtung gemäß dem Oberbegriff des Anspruchs 1.

Es sind Scheibenwischvorrichtungen für Kraftfahrzeuge bekannt, bei denen der Scheibenwischerantrieb ein aufwändiges Kurbelgetriebe zur Erzeugung der oszillierenden Bewegung des Wischerarms aufweist.

Daneben sind Scheibenwischvorrichtungen bekannt, deren Scheibenwischerantrieb einen sogenannten reversierenden Elektromotor umfassen, dessen Drehrichtung umkehrbar ist, so dass der Wischerarm im Betrieb eine oszillierende hin und her Bewegung vollführt. Problematisch bei den bekannten Scheibenwischvorrichtungen mit einem reversierenden Elektromotor ist, dass durch das Wegfallen des Kurbelgetriebes auch die durch das Kurbelgetriebe verursachte Selbsthemmung in Parklage wegfällt. Dies hat zur Folge, dass Drehmomente, die auf die Abtriebswelle wirken - beispielsweise durch die Anströmung des Wischerarms und des Wischblattes durch den Fahrtwind - an den Elektromotor weitergegeben werden, da dass in der Regel zur Anwendung kommende Schneckengetriebe nur eine unzureichende Selbsthemmung aufweist. Da der Elektromotor im Ruhezustand, also bei in einer Parklage befindlichem Wischerarm jedoch nicht bestromt und damit frei drehbar ist, besteht die Gefahr, dass der Wischerarm samt Wischerblatt durch den Fahrtwind in das Wischfeld bewegt wird. Der gleiche Effekt kann in einer Waschstraße durch die Kraftbeaufschlagung des Wischerarms durch die rotierenden Bürsten auftreten.

Zur Lösung dieses Problems schlägt die DE 103 12 982 A1 vor, Energiespeichermittel vorzusehen, die bei einer Drehung der Abtriebswelle in der einen Drehrichtung Energie aufnehmen und in der anderen Drehrichtung wieder abgeben. Nachteilig dabei ist, dass die Federkraft der als Energiespeicher zum Einsatz kommenden Spiralfeder im Laufe der Zeit nachlassen kann, so dass auch die Vorspannung des Wischerarms nachlässt und der Wischerarm in der Folge aus seiner Parklage, beispielsweise durch Fahrtwindeinflüsse, herausbewegt werden kann.

### Offenbarung der Erfindung

### Technische Aufgabe

Der Erfindung liegt daher die Aufgabe zugrunde, eine alternative Scheibenwischvorrichtung vorzuschlagen, bei der der Wischerarm zuverlässig - auch nach einem längeren Betriebseinsatz - in seiner Parklage gehalten wird.

### Technische Lösung

Diese Aufgabe wird mit den Merkmalen des Anspruchs 1 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen.

Der Erfindung liegt der Gedanke zugrunde, zusätzlich oder vorzugsweise anstelle von Energiespeichermitteln zum Vorspannen des Wischerarms in seine Parklage, Mittel zum Blockieren des Scheibenwischerantriebs in einer geänderten Position, insbesondere bei in der Parklage befindlichen Wischerarm vorzusehen. Eine nach dem Konzept der Erfindung ausgebildete Scheibenwischvorrichtung mit Mitteln zum Blockieren des Scheibenwischerantriebs weist bevorzugt einen kurbelgetriebefreien Scheibenwischerantrieb auf, wobei der Scheibenwischerantrieb bevorzugt mit einem reversierenden Elektromotor sowie einer Abtriebswelle zum Festlegen und pendelnden Hin- und Herbewegen des Wischerarms versehen ist. Dabei liegt es im Rahmen der Erfindung, dass die Abtriebswelle von der Motorwelle des Elektromotors gebildet ist oder drehfest mit dieser verbunden ist. Alternativ ist die Motorwelle des Elektromotors mittels eines, insbesondere als Schneckengetriebe ausgebildeten Getriebes drehmomentübertragend mit der Abtriebswelle gekoppelt. Mittels der Mittel zum Blockieren des Scheibenwischerantriebs ist es möglich, den Scheibenwischerantrieb in einer gewünschten, insbesondere definierten Position, vorzugsweise bei in der Parklage befindlichem Wischerarm zu blockieren, so dass ein unbeabsichtigtes Herausbewegen des Wischerarms aus dieser Position sicher verhindert wird. Vorzugsweise umfasst der Scheibenwischerantrieb eine Steuerung, die für eine automatische Aktivierung der Blockiermittel sorgt. Insbesondere soll die Steuerung sicherstellen, dass der Scheibenwischerantrieb ausschließlich bei in der Parklage befindlichem Wischerarm blockiert wird und bevorzugt auch nur dann, wenn der Scheibenwischerantrieb nach Vorgabe eines Fahrzeugführers ausgeschaltet wurde.

In Weiterbildung der Erfindung ist mit Vorteil vorgesehen, dass die Mittel zum Blockieren des Scheibenwischerantriebs derart ausgebildet sind, dass sie einen Formschluss mit mindestens einem Bauteil des Scheibenwischerantriebs herstellen können. Derart ausgebildete Mittel zum formschlüssigen Blockieren des Scheibenwischerantriebs unterliegen zumindest weitgehend keinem Verschleiß, so dass auch nach einer langen Betriebszeit der Scheibenwischervorrichtung eine sichere Arretierung des Scheibenwischerantriebs bei in der Parklage befindlichen Wischerarm sichergestellt ist. Zudem ist es auf einfache Weise möglich, ein derartiges Mittel besonders stabil auszubilden, um den Wischerarm auch bei großen, wirkenden äußeren Verstellkrafteinflüssen sicher halten zu können.

Von besonderem Vorteil ist eine Ausführungsform, bei der die Mittel zum Blockieren des Scheibenwischerantriebs den Scheibenwischerantrieb ohne Bestromung, also ohne aktiv betätigt werden zu müssen, blockieren, so dass ein Blockieren des Scheibenwischerantriebs auch ohne eine Bestromung der Scheibenwischervorrichtung bzw. der Mittel zum Herstellen der Blockierung sichergestellt werden kann.

Bevorzugt sind die Mittel zum Blockieren des Scheibenwischerantriebs derart ausgebildet und/oder angeordnet, dass sie den Scheibenwischerantrieb automatisch blockieren, wenn die Bestromung eines elektrischen Antriebsmotors des Scheibenwischerantriebs unterbrochen wird und sich vorzugsweise der Wischerarm in seiner Parklage befindet.

Dies kann beispielsweise dadurch realisiert werden, dass die Blockiermittel bei einer Bestromung ein Blockieren des Scheibenwischerantriebs verhindern, wobei aus dem Unterbrechen der Bestromung automatisch ein Blockieren des Scheibenwischerantriebs resultiert.

Beispielsweise ist es mit Vorteil realisierbar, dass die Mittel zum Blockieren des Scheibenwischerantriebs ein Blockierelement umfassen, das zwischen einer den Scheibenwischerantrieb blockierenden Blockierposition und einer Freigabeposition, in der der Scheibenwischerantrieb den Wischerarm frei pendelnd antreiben kann, verstellbar ist. Bevorzugt ist das Blockierelement dabei in Richtung seiner Blockierposition federkraftbeaufschlagt, so dass das Blockierelement auch - oder gerade bei - Nicht-Bestromung verstellbar ist.

Bevorzugt ist das Blockierelement, insbesondere entgegen der Kraft einer Feder mittels eines elektromagnetischen Aktuators aus seiner Blockierposition in seine Freigabeposition, vorzugsweise in einer Linearbewegung verstellbar. Insbesondere dann, wenn das Verstellen entgegen der Kraft einer Feder erfolgt, wird das Blockierelement automatisch bei Unterbrechen der Bestromung des elektromagnetischen Aktuators aufgrund der Federkraftbeaufschlagung in seine Blockierposition verstellt.

Alternativ zu einem elektromagnetischen Aktuator zum Realisieren einer Linearbewegung des Blockierelementes ist es möglich, das Blockierelement beispielsweise mittels eines Elektromotors, aus seiner Blockierposition in seine Freigabeposition, vorzugsweise entgegen der Kraft einer Feder, insbesondere in einer Schwenkbewegung zu verstellen.

Obwohl das Verstellen des Blockierelementes aus seiner Blockierposition heraus in eine Freigabeposition entgegen der Kraft einer Feder (Rückstellfeder) bevorzugt ist, ist auch eine Ausführungsform realisierbar, bei der das Blockierelement mittels des elektromagnetischen Aktuators oder eines Elektromotors in seine Blockierposition verstellbar ist.

Von besonderem Vorteil ist eine Ausführungsform, bei der der Scheibenwischerantrieb einen reversierenden Elektromotor umfasst, der eine Schnecke reversierend antreibt und bei dem ein Zahnrad mit der Schnecke in Eingriff ist, wobei das Zahnrad entweder drehfest mit der Abtriebswelle, an der der Wischerarm festgelegt ist, verbunden oder einstückig mit dieser ausgebildet ist. Dabei kann ein Blockieren des Scheibenwischerantriebs mit Vorteil dadurch erfolgen, dass das Blockierelement in seiner Blockierposition in eine Außenverzahnung des Zahnrades eingreift. Zusätzlich oder alternativ ist es möglich, dass das Zahnrad, insbesondere in einer axialen Bewegung in seine Blockierposition verstellbar ist, in der es mit einer stirnseitigen Ausnehmung des Zahnrades in Eingriff ist. Zusätzlich oder alternativ zu dieser Ausführungsform ist es denkbar, dass das Blockierelement mit der Schnecke des Scheibenwischers und/oder dem Motoranker des Elektromotors des Antriebs und/oder einem sonstigen drehbar gelagerten Bauteil des Scheibenwischerantriebs blockierend zusammenwirkt.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: eine schematische Darstellung einer Scheibenwischvorrichtung eines Kraftfahrzeuges,
- Fig. 2:: eine Scheibenwischvorrichtung mit Mitteln zum Blockieren des Scheibenwischerantriebs, wobei die Blockiermittel ein verschwenkbares Blockierelement umfassen,
- Fig. 3:: eine Scheibenwischvorrichtung mit alternativ ausgebildeten Mitteln zum Blockieren des Scheibenwischerantriebs, wobei die Blockiermittel ein linear verstellbares Blockierelement umfassen, das in seiner Blockierposition mit einer stirnseitigen Ausnehmung eines Zahnrades zusammenwirkt und
- Fig. 4:: eine Scheibenwischvorrichtung mit Mitteln zum Blockieren des Scheibenwischerantriebs, wobei die Blockiermittel ein linear verstellbares Blockierelement aufweisen, das in seiner Blockierposition mit einer Außenverzahnung eines Zahnrades des Scheibenwischerantriebs zusammenwirkt.

### Ausführungsformen der Erfindung

In den Figuren sind gleiche Bauteile und Bauteile mit der gleichen Funktion mit den gleichen Bezugszeichen gekennzeichnet.

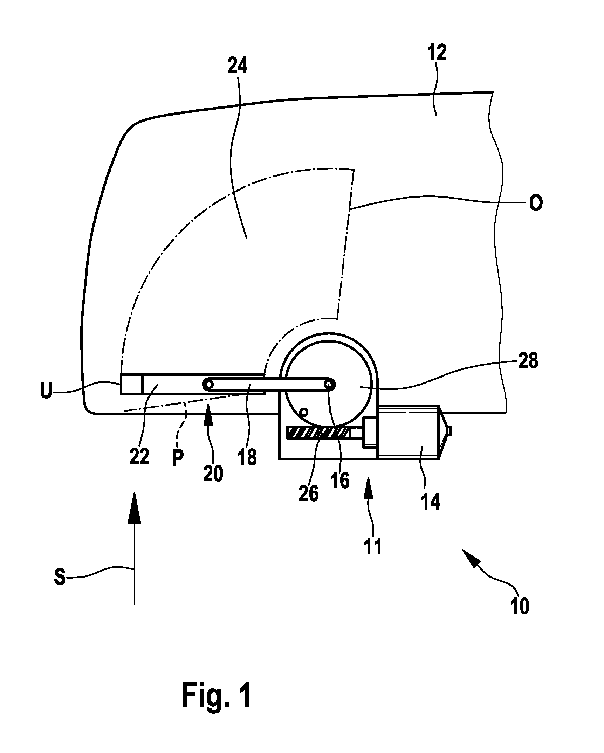

Fig. 1 zeigt eine schematische Darstellung einer Scheibenwischvorrichtung 10 an einer Scheibe 12 eines Kraftfahrzeugs. Die Scheibe 12 ist hier der Übersichtlichkeit halber nur zur Hälfte dargestellt. Die Scheibenwischvorrichtung 10, bzw. ein Scheibenwischerantrieb 11 der Scheibenwischervorrichtung 10 umfasst einen reversierbaren Elektromotor 14, der eine Abtriebswelle 16 antreibt, mit der drehfest ein Wischerarm 20 verbunden ist, an dessen freien Ende 18 ein Wischerblatt 22 angelenkt ist. Im Betrieb vollführt die Abtriebswelle 16 eine pendelnde Bewegung, so dass der Wischerarm 20 sich pendelnd über die Scheibe bewegt. Der vom Wischerblatt 22 überstrichene Bereich auf der Scheibe 12 bildet hierbei ein Wischfeld 24.

Während des Betriebs pendelnd der Wischerarm 20 bei einer Bestromung des Elektromotors 14 zwischen einer unteren Umkehrlage U und einer oberen Umkehrlage O. Wird die Scheibenwischvorrichtung 10 durch eine Bedienperson abgeschaltet, verfährt der Elektromotor 14 den Wischerarm in eine Parklage P, die sich unterhalb der unteren Umkehrlage U befindet, wobei der Wischerarm in der Parklage P besonders windgeschützt ist. Daneben ist auch eine Ausführungsform realisierbar, bei der die Parklage P des Wischerarms 20 mit der unteren Umkehrlage U übereinstimmt.

Fährt das Kraftfahrzeug, so wirkt der Fahrtwind auf den Wischerarm 20 und drückt diesen - aufgrund der Neigung der Scheibe 12 - nach oben. Diese Luftströmung ist durch den Strömungspfeil S symbolisiert. Dadurch wirkt auf die Abtriebswelle 16 ein Drehmoment. Ist der Elektromotor 16 nicht bestromt, so würde der Wischerarm 20, falls nicht im Folgenden beschriebene Mittel zum Blockieren des Scheibenwischerantriebs 11 vorgesehen wären, nach oben in das Wischfeld 24 bewegt, da der Scheibenwischerantrieb 11 nur eine geringe Selbsthemmung aufweist und daher dem von dem Fahrtwind erzeugten Drehmoment kein ausgleichendes Drehmoment entgegenwirkt. Durch das Vorsehen der Mittel zum Blockieren des Scheibenwischerantriebs 11 wird dieser unerwünschte Effekt verhindert.

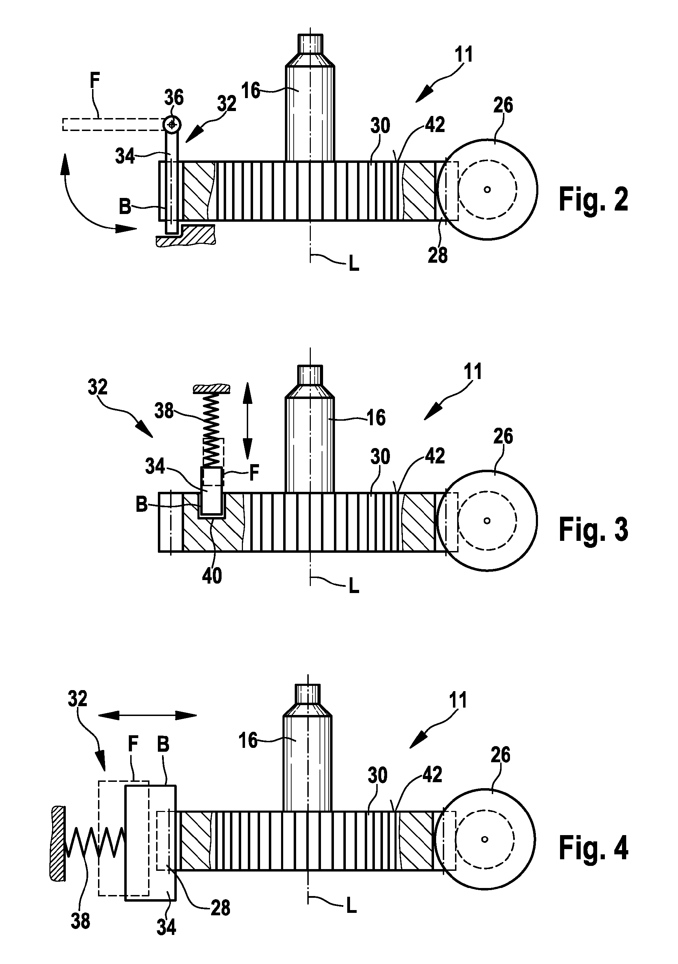

In Fig. 2 ist eine mögliche Ausgestaltung des Scheibenwischerantriebs 11 ausschnittsweise gezeigt. Der Scheibenwischerantrieb 11 umfasst eine Schnecke 26, die auf der Motorwelle eines nicht gezeigten Elektromotors sitzt. Die Schnecke 26 ist im drehmomentübertragenden Eingriff mit einer Außenverzahlung 28 eines Zahnrades 30, das drehfest mit einer Abtriebswelle 16 verbunden ist. An der Abtriebswelle 16 kann - wie aus Fig. 1 ersichtlicht - ein Wischerarm festgelegt werden.

Zum Blockieren des Scheibenwischerantriebs 11 bei in der Parklage P (vgl. Fig. 1) befindlichem Wischerarm sind Mittel 32 zum Blockieren des Scheibenwischerantriebs 11 vorgesehen. Die Mittel 32 umfassen ein bolzenförmiges Blockierelement 34, das zwischen einer Freigabeposition F, in der der Scheibenwischerantrieb 11 betreibbar ist und einer Blockierposition B verschwenkbar ist, in der der Scheibenwischerantrieb 11 blockiert ist und somit ein ungewolltes Herausbewegen des Wischerarms 20 aus seiner Parklage P verhindert wird. Zum Verschwenken des Blockierelementes 34 aus seiner Blockierposition B um eine Schwenkachse 36 entgegen der Kraft einer Feder (nicht dargestellt) in seine Freigabeposition F ist ein nicht gezeigter Elektromotor vorgesehen. Der Elektromotor ist mit einer Steuereinheit verbunden, die diesen kurz bevor der reversible Elektromotor zum Antreiben der Schnecke 26 aktiviert wird, bestromt wird, so dass die Blockierung des Scheibenwischerantriebs 11 aufgehoben wird und der Wischerarm pendelnd hin- und herbewegt werden kann. Sobald die Scheibenwischvorrichtung 10 die Vorgabe einer Bedienperson deaktiviert wurde und der Wischerarm mit Hilfe des Elektromotors in seine Parklage P verfahren wurde, wird nicht nur die Bestromung des Elektromotors des Scheibenwischerantriebs 11 unterbrochen, sondern auch die Bestromung des Elektromotors der Mittel zum Blockieren des Scheibenwischerantriebs 11, so dass das Blockierelement 34 federkraftunterstützt in seine Blockierposition B verschwenkt wird, in der es formschlüssig in die Außenverzahnung 28 des Zahnrades 30 eingreift.

In Fig. 3 ist eine alternative Ausführungsform der Mittel 32 zum Blockieren des Scheibenwischerantriebs 11 gezeigt. Die Mittel 32 umfassen ein bolzenförmiges Blockierelement 34, das mittels eines nicht eingezeichneten elektromagnetischen Aktuators aus seiner Blockierposition B linear in eine Freigabeposition entgegen der Kraft einer Feder 38 verstellt werden kann. Nach Unterbrechen der Bestromung des elektromagnetischen Aktuators sorgt die Feder 38 dafür, dass das Blockierelement 34 automatisch in seiner Blockierposition B linear verstellt wird, in der es in formschlüssigem Eingriff mit einer Ausnehmung 40 in einer Stirnseite 42 des Zahnrades 30 ist.

In Fig. 4 ist eine weitere alternative Ausgestaltungsform der Mittel 32 zum Blockieren des Scheibenwischerantriebs 11 gezeigt. Die Mittel 32 umfassen ein scheibenförmiges Blockierelement, welches linear in radialer Richtung in Bezug auf eine Längsachse L der Abtriebswelle 16 verstellbar ist. Dabei ist das Blockierelement 34 zwischen einer Freigabeposition F und einer Blockierposition B verstellbar, in der es in Eingriff mit der Außenverzahnung 28 des Zahnrades 30 ist. Zum Herausbewegen des Blockierelementes 34 aus seiner Blockierposition B ist ein elektromagnetischer Aktuator (nicht gezeigt) vorgesehen, der das Blockierelement 34 (Anker) entgegen der Kraft einer Feder 38 anzieht, wobei nach Unterbrechung der Bestromung des elektromagnetischen Aktuators die Feder 38 das Blockierelement 34 automatisch in seine Blockierposition B verstellt.

## Patentansprüche

1. Scheibenwischvorrichtung mit einem Scheibenwischerantrieb (11) zum pendelnden Antreiben eines in eine Parklage (P) verstellbaren Wischerarms (20),
**dadurch gekennzeichnet,**
**dass** Mittel (32) zum Blockieren des Scheibenwischerantriebs (11), insbesondere bei in der Parklage (P) befindlichem Wischerarm (20), vorgesehen sind.

2. Scheibenwischvorrichtung nach Anspruch 1,
**dadurch gekennzeichnet,**
**dass** die Mittel (32) zum Blockieren des Scheibenwischerantriebs (11) einen Formschluss mit mindestens einem Bauteil des Scheibenwischerantriebs (11) und/oder dem Wischerarm (20) herstellend ausgebildet sind.

3. Scheibenwischvorrichtung nach einem der Ansprüche 1 oder 2,
**dadurch gekennzeichnet,**
**dass** die Mittel (32) den Scheibenwischerantrieb (10) ohne Bestromung blockierend ausgebildet sind.

4. Scheibenwischvorrichtung nach einem der vorhergehenden Ansprüche,
**dadurch gekennzeichnet,**
**dass** die Mittel (32) derart ausgebildet sind, dass sie den Scheibenwischerantrieb (11) automatisch blockieren, wenn die Bestromung eines elektrischen Antriebsmotors des Scheibenwischerantriebs (11) unterbrochen wird.

5. Scheibenwischvorrichtung nach einem der vorhergehenden Ansprüche,
**dadurch gekennzeichnet,**
**dass** die Mittel (32) ein Blockierelement (34) aufweisen, das zwischen einer den Scheibenwischerantrieb (11) blockierenden Blockierposition (B) und einer Freigabeposition (F) verstellbar ist.

6. Scheibenwischvorrichtung nach Anspruch 5,
**dadurch gekennzeichnet,**
**dass** das Blockierelement (34) in Richtung seiner Blockierposition (B) federkraftbeaufschlagt ist.

7. Scheibenwischvorrichtung nach einem der Ansprüche 5 oder 6,
**dadurch gekennzeichnet,**
**dass** das Blockierelement (34) mittels eines elektromagnetischen Aktuators aus seiner Blockierposition (B) in seine Freigabeposition (F), insbesondere in einer Linearbewegung, verstellbar ist.

8. Scheibenwischvorrichtung nach einem der Ansprüche 5 oder 6,
**dadurch gekennzeichnet,**
**dass** das Blockierelement (34), insbesondere mittels eines Elektromotors (14) aus seiner Blockierposition (B) in seine Freigabeposition (F) in einer Schwenkbewegung verstellbar ist.

9. Scheibenwischvorrichtung nach einem der Ansprüche 5 bis 8,
**dadurch gekennzeichnet,**
**dass** das Blockierelement (34) in seiner Blockierposition (B) mit einem drehfest mit einer Abtriebswelle (16) verbundenen oder einstückig mit dieser ausgebildeten Zahnrad (30) und/oder mit einer mit dem Zahnrad (30) in Eingriff befindlichen Schnecke (26) und/oder mit einem Motoranker formschlüssig zusammenwirkt.

10. Scheibenwischvorrichtung nach Anspruch 9,
**dadurch gekennzeichnet,**
**dass** das Blockierelement (34) in seiner Blockierposition mit einer Außenumfangsverzahnung (28) des Zahnrades (30) und/oder mit einer Ausnehmung (40) in einer Stirnseite (42) des Zahnrades (30) in Eingriff ist.
